(19) Europäisches Patentamt
European Patent Office
Office européen des brevets

(11) **EP 2 763 334 B1**

(12) **EUROPEAN PATENT SPECIFICATION**

(45) Date of publication and mention
of the grant of the patent:
**16.08.2017 Bulletin 2017/33**

(51) Int Cl.:
***H04B 10/2513*** *(2013.01)*   ***H04B 10/275*** *(2013.01)*

(21) Application number: **13305113.6**

(22) Date of filing: **01.02.2013**

(54) **Method of compensating chromatic dispersion in an optical ring network**

Verfahren zur Kompensierung von chromatischer Dispersion in einem optischen Ringnetzwerk

Procédé de compensation de dispersion chromatique dans un réseau optique en anneau

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**06.08.2014 Bulletin 2014/32**

(73) Proprietor: **ALCATEL LUCENT
92100 Boulogne-Billancourt (FR)**

(72) Inventors:
• **Pointurier, Yvan
91300 Massy (FR)**
• **Bigo, Sébastien
91300 Massy (FR)**

(74) Representative: **Berthier, Karine et al
Alcatel-Lucent International
148/152, route de la Reine
92100 Boulogne-Billancourt (FR)**

(56) References cited:
**EP-A1- 0 684 709     EP-A1- 2 249 493
EP-A1- 2 552 037**

• KAZOVSKY L G ET AL: "A summary of the hornet project: a next-generation metropolitan area network", IEEE JOURNAL ON SELECTED AREAS IN COMMUNICATIONS, IEEE SERVICE CENTER, PISCATAWAY, US, vol. 21, no. 9, 1 November 2003 (2003-11-01), pages 1478-1494, XP011103043, ISSN: 0733-8716, DOI: 10.1109/JSAC.2003.818838
• YUANG M ET AL: "HOPSMAN: An Experimental Testbed System for a 10-Gb/s Optical Packet-Switched WDM Metro Ring Network", IEEE COMMUNICATIONS MAGAZINE, IEEE SERVICE CENTER, PISCATAWAY, US, vol. 46, no. 7, 1 July 2008 (2008-07-01), pages 158-166, XP011229495, ISSN: 0163-6804, DOI: 10.1109/MCOM.2008.4557060

**Description**

**Field of the invention**

The invention relates to a method of compensating chromatic dispersion in an optical ring network as well as a control or management system for an optical ring network.

**Background**

For transmitting data in an optical ring network, it is these days a prominent approach to rely on different wavelength division multiplexed (WDM) optical signals for data transmission. Each WDM optical signal carries a respective data packet sequence, wherein data packets of a data packet sequence are placed within respective packet time slots of a same time duration. Furthermore, the data packets are separated by guard band time slots, which have a same guard band time duration. The different respective data packet sequences of different respective WDM optical signals are synchronous to each other, in that the guard band time slots of the different optical WDM signals are synchronous to each other and also the different data packets of the different optical WDM signals are synchronous to each other.

At a network node placed along the optical ring network, data reception may be carried out as coherent data reception using a tunable receiver. The tunable receiver may use a local tunable oscillator that provides an optical carrier signal of the specific wavelength. The tunable receiver uses the local oscillator signal for downconverting such an optical WDM signal, which is of the local oscillator's wavelength. After downconverting the optical WDM signal, the downconverted signal may be used for deriving received data from one or more data packets of one or more packet time slots. In the case, that data reception is carried out as non-coherent data reception, wherein a tunable receiver may use a tunable optical filter to filter out one of the optical WDM signals. The filtered optical signal may then be used for deriving received data. The concept of using a tunable receiver allows to tune the tunable receiver, using a local oscillator or a tunable optical filter, to different wavelengths within different respective packet time slots for receiving data from different respective optical WDM signals during the respective time slots.

Data transmission may be carried out at an optical node using a tunable transmitter. The tunable transmitter tunes for a specific data packet time slot to that wavelength, at which an optical signal shall be generated for generating the data packet carrying transmission data. The concept of using a tunable transmitter allows to tune the tunable transmitter to different wavelengths within different respective packet time slots for generating receiving data packets at different respective optical WDM signals during the respective time slots.

The optical fibers acting as optical links in the optical ring network affect the different optical WDM signals by chromatic dispersion, which depends on the specific wavelength of the specific signal. This leads to a time shift between the different optical WDM signals, wherein such a time shift increases the longer the transmission distance is over which the WDM signals are transmitted.

In the case, that the transmission distance and therefore also the amount of chromatic dispersion affecting the optical WDM signals exceeds a certain amount, it may be the case, that the different optical WDM signals are shifted in time to each other, such that data packets of different optical WDM signals overlap.

This is of disadvantage, since the foreseen time duration of the guard band time slot is supposed to allow one or more of two things. Firstly, the guard band time slot may allow a tunable receiver to tune from one wavelength, needed for data reception at the one wavelength during one data packet time slot, to another wavelength, needed for data reception at the other wavelength during a next successive data packet time slot. Secondly, the guard band time slot may allow a tunable transmitter to generate an optical signal at one wavelength for generating a data packet during one data packet time slot and also to furthermore generate another optical signal at another wavelength for generating a data packet during a next successive data packet time slot.

In the case that data packets of different WDM optical signals overlap in time, the guard band time gap is not present any more between the overlapping data packets. This does not give a tunable receiver the chance anymore to receive optical data packets of adjacent packet time slots, which now overlap. This does also not give a tunable transmitter the chance anymore to generate optical data packets for adjacent packet time slots, which now overlap. Thus, there is a need for avoiding such an overlap of optical data packets of different WDM optical signals caused by chromatic dispersion of the optical fibers connecting the node.

The document EP 2552037A1 discloses an optical network device, which uses a wavelength selective switch for distributing optical signals of different wavelengths of a WDM channel onto a plurality of delay lines with respective distinct fixed delays for the purpose of shifting the individual optical signals in time in order to compensate delays caused by chromatic dispersion.

The document EP 2249493A1 discloses a method for operating a coherent optical packet receiver comprising a linear physical impairment compensation filter. The settings of the filter, that is applied onto the received optical packet, are determined as a function of previously determined settings of the filter applied onto an optical packet having a similar travelling parameter as the received optical packet.

## Summary

Proposed is a method of compensating chromatic dispersion in an optical ring network.

Data is transmitted along the optical ring network using a set of wavelength division multiplexed optical WDM signals carrying respective synchronous data packet sequences. Data packets of the data packet sequences are transmitted within respective packet time slots of a same packet duration value. The data packets are separated by guard band time slots of a same guard band duration value.

Provided are

- link length values, which indicate respective lengths of optical fiber links connecting the network nodes of the optical ring network,

- a bandwidth value, which indicates a bandwidth of the transmission band,

- at least one dispersion value, which indicates a chromatic dispersion affecting the WDM optical signals on the optical fiber links, and

- an accumulated dispersion value, which indicates an amount of accumulated dispersion that may be compensated at one or at multiple ones of the network nodes,

The proposed method comprises furthermore the steps of

- deriving for transmission routes of the network respective time shifts caused by chromatic dispersion for two predefined wavelengths of the transmission band on the respective transmission routes, using the provided values,

- determining those of the network nodes, at which the accumulated dispersion shall be compensated for ensuring that the respective time shifts of the respective transmission routes remain below a predefined time threshold, and

- sending control signals to the determined network nodes, indicating that the determined network nodes shall compensate the accumulated dispersion.

In order to grasp the one or more possible advantages of the proposed method, different aspects have to be taken into consideration.

As described previously above, there is a need for compensating chromatic dispersion affecting optical WDM signals transmitted within an optical ring network for avoiding time shifts of the optical WDM signals caused by the chromatic dispersion. Such time shifts may cause an overlap of data packets in the case, that a tunable receiver and/or a tunable transmitter is used at network nodes of the optical ring network.

Different solutions have been proposed in the prior art.

One solution is that of an optical hub node being placed along the optical ring network. Such a hub node is a node that is capable of regenerating all optical WDM signals, by converting the optical signals to the electrical domain, resynchronizing them and then reconverting them to the optical domain for further transmission along the network. Such a hub node that may be used for synchronization of the optical WDM signals is not modulation format transparent, therefore the node may have to be modified in the case that the modulation format used on the different optical WDM signals for data transmission is modified. Furthermore, such a hub node would require many hardware devices for the mentioned optical/electrical/optical regeneration.

A further approach proposed in the prior art is that disclosed in the yet unpublished EP patent application 12306184.8. In this patent application, it is proposed to automatically adjust the ratio between the guard band time duration and the data packet time duration for ensuring synchronization of the different optical WDM signals. This boils down to enlarging the guard band for wavelengths that are transmitted faster than other ones within the optical fibers. This mechanism scales to a few hundred kilometers of optical ring circumference, however, for longer rings the guard bandwidth may become very large and the guard band time duration may be no longer negligible compared to the data packet time duration. The solution proposed herein avoids this problem of enlarging the guard band time duration. Furthermore, the solution proposed herein scales for any ring length for keeping the time duration of the data packets and/or the time duration of the guard bands the same for all wavelengths of all optical WDM signals.

A further method proposed in the prior art is that disclosed in the yet unpublished EP patent application 12290124.2. In this patent application, it is proposed to rely on fiber delay lines that have to be tailored to each deployed node for compensating chromatic dispersion present within the signals received at the node by the fiber delay lines installed within the node. This results in increased installation costs. In contrast to this, the solution proposed herein does not rely on such costly fiber delay lines.

A third solution proposed according to the prior art is that of using at a receiving device an optical device that is designed in its properties to the optical fiber link preceding the receiving device. The optical device is designed, such that it causes inverse time shifts, which are inverse to the ones caused by the chromatic dispersion of the optical fiber preceding the receiving device. In this solution, the optical device, preferably called dispersion compensation module, has to be carefully tailored, in order to compensate exactly or at least roughly the chromatic dispersion of the specific preceding optical fiber, from which the optical WDM signals are received. Furthermore, many different types of optical devices causing different amounts of inversed time shifts would be needed, for providing after different optical fibers of different optical link lengths different amounts of time shifts. This would result in numerous management and inventory problems as well as further expenses. In contrast to this, the method proposed herein does not demand to use an optical device as a dispersion compensation module to compensate exactly or roughly that amount of chromatic dispersion that is caused by the specific preceding optical fiber, from which the optical WDM signals are received at the network node.

Instead, the method proposed herein is of clear advantage, since it is able to take into account an amount of accumulated dispersion that may be compensated at one or at multiple ones of the network nodes. Preferably, more than one of the network nodes is able to compensate that amount of accumulated dispersion. Even more preferably, each network node of the network is able to compensate the mentioned amount of accumulated dispersion.

By determining different transmission routes within the network, wherein a transmission route consists of one or more fiber links, and determining for the different transmission routes respective time shifts caused between two pre-defined wavelengths of the transmission band, it is possible to decide, which of the nodes shall be engaged, in order to keep the respective time shifts of the different possible transmission routes below a pre-defined threshold. The pre-defined threshold is preferably the time duration of the guard band duration value.

Thus, the method proposed herein does not rely on different amounts of accumulated dispersion that is compensated at different network nodes. Instead each network node that is able to compensate a predefined amount of accumulated dispersion may only be able to compensate this predefined amount of accumulated dispersion, which may differ from the amount of accumulated dispersion caused by chromatic dispersion of its preceding optical fiber link. Preferably, the predefined amount of accumulated dispersion may be the same for all of those nodes, which may compensate an accumulated dispersion. In other words, the amount of accumulated dispersion that is compensable at a network node does not have to match the amount of accumulated dispersion caused by a specific optical fiber of a specific optical link from which the optical WDM signals are received at the network node.

The determination of those network nodes, at which an amount of accumulated dispersion has to be compensated, may be carried out by an optimization algorithm, which is preferably a minimization algorithm. Such algorithms will be described in detail later on.

Once, that the network nodes are determined, at which an amount of accumulated dispersion has to be compensated, respectively, control signals may be sent to the determined network nodes, indicating that the determined network nodes shall compensate the predefined amount of accumulated dispersion.

The method proposed herein may be carried out by a control/management system, which then instructs via a control-plane the different network nodes to compensate the predefined amount of accumulated dispersion.

The method proposed herein enables a true plug-and-play installation and furthermore also to react to fiber length changes within the network, as long as those fiber length changes are provided to the method. Even furthermore, the method proposed herein may react to a change of chromatic dispersion caused by an optical fiber during a maintenance operation or when temperature variations come into play, which may lead to excessive thermal expansion. Thus, the method proposed herein may be used for compensating chromatic dispersion in an optical ring network even in the case of modified conditions for optical transmission within the ring network, without the need of compensating the chromatic dispersion by means of management operating out in the field.

The proposed method may not only achieve a resynchronization of the different optical WDM signals for compensating an amount of chromatic dispersion caused by the different optical fiber links, but also may compensate pulse distortion resulting from the chromatic dispersion. Due to the fact, that optical devices are used for compensating accumulated dispersion, wherein the devices are preferably called dispersion compensation modules, it is of advantage to use such optical devices, since the costs for such devices have been dropping clearly during the last years. Thus, using such optical devices reduces further needs of digital signal processing for compensating pulse distortion caused by chromatic dispersion.

**Brief description of the Figures**

Figure 1 shows an optical ring network together with a first set of optical WDM signals.

Figure 2 shows an optical ring network together with a second set of optical WDM signals.

Figure 3 shows a proposed optical network node according to an embodiment.

Figure 4 shows a proposed control/management system for an optical ring network according to an embodiment.

Figure 5 shows steps of a method proposed herein according to an embodiment.

Figure 6 shows sub-steps for determining a number of nodes according to a preferred embodiment.

Figure 7 shows sub-steps for determining a number of nodes according to a further preferred embodiment.

Figure 8 shows steps for a method of determining a suitable amount of accumulated dispersion to be compensated at a network node of an optical ring network according to an embodiment.

Figure 9a and b show results of boundary conditions for an accumulated dispersion that may be compensated at a network node for different number of network nodes present within the network.

## Description of embodiments

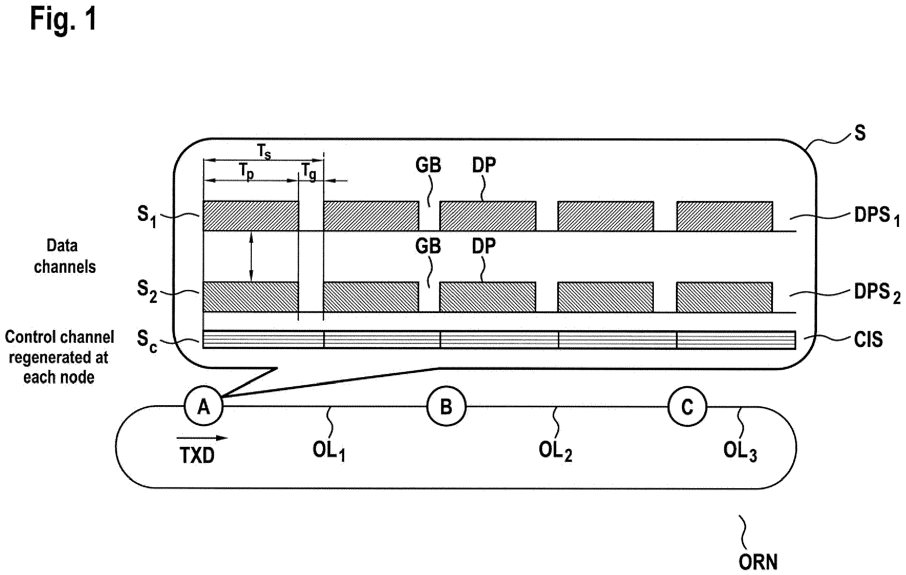

Figure 1 shows an optical ring network ORN, which contains a number of optical nodes A, B, C. The nodes are connected by respective optical links $OL_1$, $OL_2$, $OL_3$. Data is transmitted by means of optical WDM signals. The transmission direction TXD is only exemplarily, transmission may be carried out also in the opposite direction.

Figure 1 shows furthermore a set S of optical WDM signals $S_1$, $S_2$, $S_C$. The signals $S_1$, and $S_2$ differ in their wavelength by a wavelength difference $\Delta\lambda$. The signals $S_1$ and $S_2$ carry respective data packet sequences $DPS_1$, $DSP_2$. The data packets DP of a respective data packet sequence $DPS_1$, $DPS_2$ are of a same fixed time duration. The data packets DP of a data packet sequence $DPS_1$, $DPS_2$ are separated by guard band time slots GB, which have a same time duration preferably called guard band time duration. The time duration of a data packet DP is indicated as $T_p$, while the time duration of a guard band time slot GB is indicated as the guard band duration value $T_g$.

The data packet sequences $DPS_1$, $DPS_2$ are synchronous to each other, in that the different data packets DP are synchronous to each other and in that the different guard band time slots GB are synchronous to each other.

It shall be assumed, that the optical WDM signals $S_1$, $S_2$ carrying the sequences $DPS_1$, $DPS_2$ are transmitted at the node A.

The set S of signals shows furthermore a control signal $S_C$, which carries a sequence of control information CIS. Different data packets carrying control information within the sequence CIS are preferably not separated by a guard band GB, since the signal SC is regenerated at each of the nodes within the network.

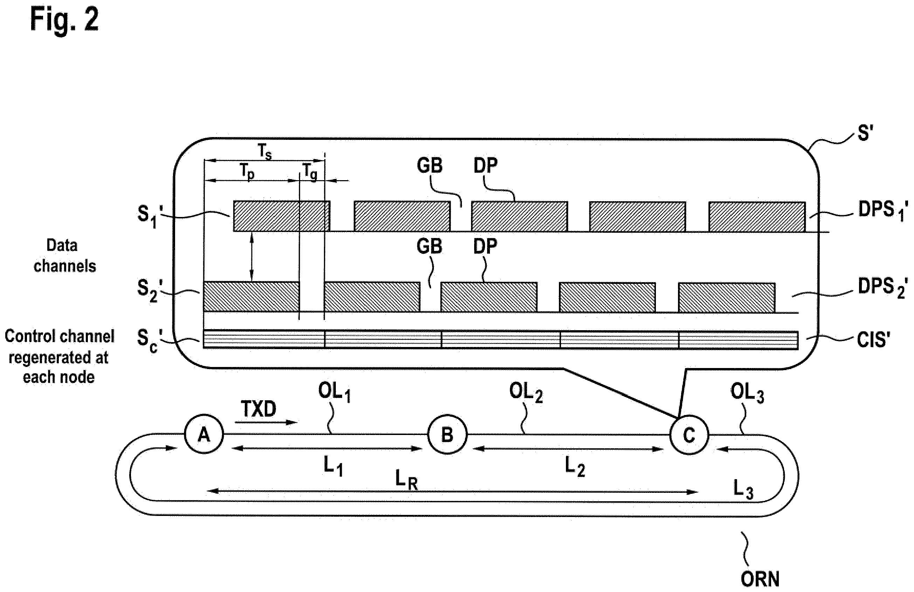

Figure 2 shows the optical ring network ORN together with a further set S' of optical signals. It shall be assumed, that the signal $S_1'$ is the signal $S_1$ of Figure 1 when being received at the node C, and that the signal $S_2'$ is the signal $S_2$ of Figure 1 when being received at the node C.

The signals $S_1'$ and $S_2'$ with their respective data packet sequences $DPS_1'$ and $DPS_2'$ are shifted in time to each other due to chromatic dispersion affecting the different wavelengths of the different signals $S_1'$, $S_2'$, such that the signals $S_1'$, $S_2'$ are shifted in time. As it can be seen in Figure 2, the time shifting caused by the chromatic dispersion of the optical fiber links forming the transmission route from the node A to the node C causes an overlap in time of different data packets of the different data packet sequences $DPS_1'$, $DPS_2'$. As previously outlined above, a reception of data packets of adjacent data packet time slots from different optical WDM signals is not feasible anymore in this case, when using a single tunable receiver and/or a tunable transmitter at the receiving node C, due to the overlap of the data packets.

Figure 2 shows furthermore for the considered optical ring network ORN an indication of the link lengths $L_1$, $L_2$, $L_3$ of the respective optical links $OL_1$, $OL_2$, $OL_3$. The optical transmission length $L_R$ of the route R between the nodes A and C in the transmission direction TXD is here given as the sum of the link lengths $L_1$ and $L_2$.

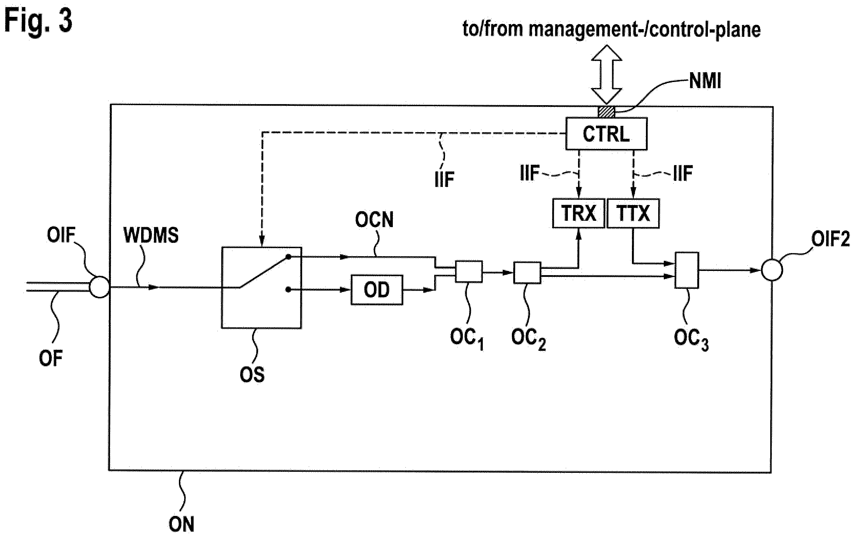

Figure 3 shows a preferred embodiment of a network node ON to be used in an optical ring network. Preferably, one or more or even preferably all of the nodes A, B, C shown in the Figures 1 or 2 are of the type of the node ON shown in Figure 3.

The node ON comprises an optical interface OIF, which may be connected to an optical fiber OF of an optical link. The optical interface OIF is able to receive a set of WDM optical signals WDMS, which carry respective data packet sequences as previously described above. The node ON contains a further optical interface OIF2, at which the node transmits optical signals into an optical link of the optical ring network.

The optical WDM signals WDMS may be provided to a receiver TRX of the node ON, as it will be described in detail now on. The node comprises also a transmitter TTX. In the embodiment described with regard to Figure 3, the receiver TRX is a tunable receiver and the transmitter is a tunable transmitter, in which case the proposed method described above as well as the node proposed herein is of advantage. According to a first alternative embodiment, the receiver is a fixed wavelength receiver, while the transmitter is a tunable transmitter, in which case the proposed method described above as well as the proposed node is of advantage. According to a second alternative embodiment, the receiver is a tunable receiver, while the transmitter is a fixed wavelength transmitter, in which case the proposed method described above as well as the proposed node is of advantage. In other words, the receiver and/or the transmitter is tunable.

The tunable receiver TRX is able to downconvert during a specific data packet time slot one of the optical WDM signals using a local oscillator's signal of a local oscillator not shown explicitly within Figure 3. From the downconverted signal, the tunable receiver TRX may derive received data that was contained within the data packet of the specific packet time slot.

The node ON contains a control unit CTRL, which itself contains a network management interface NMI, through which the control unit CTRL is able to exchange signals with the management-plane or control-plane. The control unit thus may receive control signals from the control-plane or the management-plane of the optical ring network.

The control unit CTRL is connected to the tunable receiver TRX for controlling the wavelength, at which the receiver TRX downconverts an optical signal within the specific packet time slot. Furthermore, the control unit CTRL is connected via an internal interface IIF to a tunable transmitter, which is preferably contained within the optical node ON. Using the tunable transmitter, which itself also may contain a further local oscillator, the control unit CTRL controls the transmitter TTX in order to generate a new optical data packet that may be inserted into this specific data time slot or another data packet time slot. The tunable receiver TRX and the tunable transmitter TTX are preferably coupled via one or more optical couplers $OC_2$, $OC_3$ to other devices of the node ON. The control unit CTRL furthermore controls via the internal interface IIF an internal optical switch OS of the node ON.

The node ON contains furthermore an optical device OD, which is able to compensate a pre-defined amount of accumulated dispersion. The device OD will be described in detail later on.

The optical switch OS is arranged within the node ON, such that it receives the optical WDM signals WDMS. The optical switch OS is furthermore arranged to and configured in a first configuration state, which may be called a first configuration state, to guide the signals WDMS, bypassing the optical device OD. In other words, in this first state, the optical switch OS is arranged to and configured to provide the signals WDMS to the receiver TRX and/or the optical interface OIF2, bypassing the optical device OD. Preferably, for this guidance or provisioning, the switch OS is configured to guide the signals WDMS via an optical connection OCN and even more preferably via one or more optical couplers $OC_1$, $OC_2$ to the receiver TRX and/or the interface OIF2.

In another configuration state, which may be called a second state, the optical switch OS is configured, such that it guides the signals WDMS to the optical device OD. Thus, in this embodiment, the switch OS guides the signals WDMS via the optical device OD to the tunable receiver TRX and/or the optical interface OIF2. For this guidance, one or more optical couplers $OC_1$, $OC_2$ are preferably used. In other words, in this second configuration state, the optical switch OS is configured, such that it guides the signals WDMS via the optical device OD to the receiver TRX and/or the interface OIF.

Thus, in the second configuration state, the optical switch ensures that the signals WDMS are subject to a compensation of accumulated dispersion achieved by the device OD. In the first configuration state, the switch OS ensures that the signals WDMS are not subject to a compensation of accumulated dispersion achievable by the device OD.

Achieving compensation of accumulated dispersion is equal to causing an amount of accumulated dispersion with a negative sign with regard to an amount of accumulated dispersion caused by an optical link of the fibers of the ring network.

The control unit CTRL is able to control the switch OS with configuration in dependence from control information received via control signals from the management-plane or control-plane. In other words, the node ON may be configured by the control unit CTRL, such that it engages the optical device OD for achieving an accumulated dispersion compensation. This means that the signals WDMS received at the node ON are subject to dispersion compensation caused by the device OD.

The optical device OD is preferably a passive optical device. In a first embodiment, the device OD is a Fiber Bragg Grating, which causes different time shifts for different optical signals of different wavelengths. Thus, a Fiber Bragg Grating causing specific amounts of different time shifts for different optical wavelengths is able to compensate a specific amount of accumulated dispersion caused by an optical transmission fiber of a specific length and of a specific optical dispersion.

In a second embodiment, the optical device is preferably an optical fiber causing chromatic dispersion that is inverse to the chromatic dispersion caused by optical fibers of the optical ring network. Thus, using such a proposed fiber with an inverse chromatic dispersion and of a specific length, a specific amount of accumulated dispersion caused by an optical fiber of the optical ring network having a certain length and a certain amount of dispersion may be compensated.

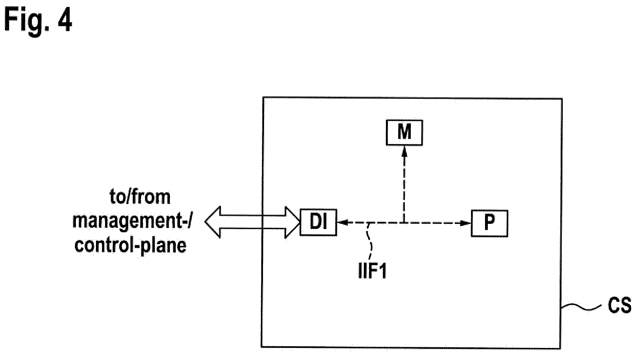

Figure 4 shows a control- or management-system CS for the optical ring network. The system CS is able to provide link length values indicating respective fiber lengths of the optical fiber links connecting the network nodes of the ring network. Furthermore, the system CS is able to provide a bandwidth value indicating a bandwidth of the transmission band used for transmitting the optical WDM signals. Furthermore, the system CS is able to provide a dispersion value indicating chromatic dispersion affecting the optical WDM signals being transmitted along the optical fiber links of the ring network. Even furthermore, the system CS is able to provide an accumulated dispersion value. This accumulated dispersion value indicates an amount of accumulated dispersion that may be compensated at a network node, as for example the node ON shown in Figure 3, by engaging the optical device OD shown in Figure 3.

The control- or management-system CS provides the above mentioned values preferably via a memory unit M, in which the mentioned provided values may be stored. Even more preferably, the system CS receives one or more of the provided values via a data interface DI, via which the system is connected to a management-plane or control-plane of the ring network. The data interface DI and the memory M are connected via an internal interface IIF to at least one processing unit P of the system CS.

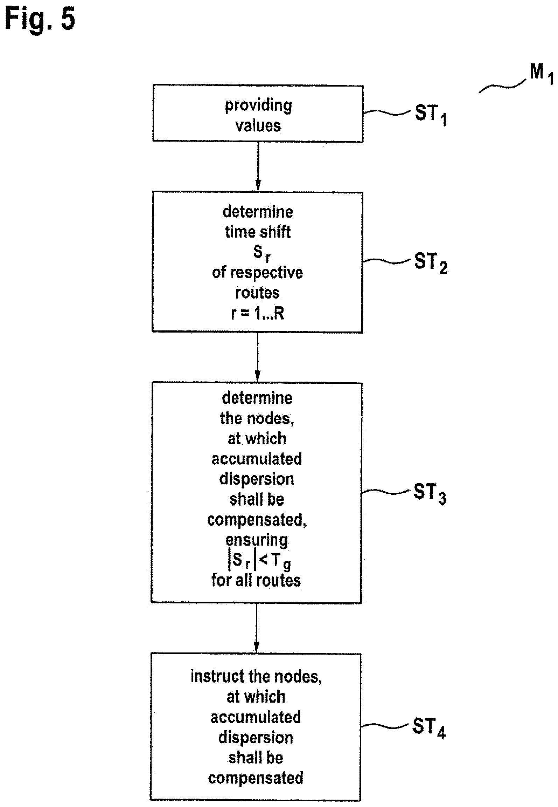

The system CS carries out a method, which is now described in detail with regard to the Figure 5.

Figure 5 shows a method M! proposed herein according to a preferred embodiment. The method $M_1$ contains different steps $ST_1$, $ST_2$, $ST_3$, $ST_4$.

Within a step $ST_1$, different values are provided. For the different nodes of the ring network with index

$$k = 1 \ldots N$$

respective link lengths

$$L_k$$

of the optical fiber links preceding the respective node with index k are provided. The number of nodes shall be the number *N*. Furthermore, a bandwidth formed by two predefined wavelengths of the transmission band used for transmitting the optical WDM signals is provided. Preferably, the bandwidth is for a first embodiment the wavelength difference between the highest wavelength and the lowest wavelength of the transmission band as $\Delta\lambda$. According to a second embodiment, the bandwidth is the wavelength difference between a center wavelength and the lowest wavelength of the transmission band as $\Delta\lambda/2$. According to a third embodiment, the bandwidth is the wavelength difference between a center wavelength and the lowest wavelength of the transmission band $\Delta\lambda/2$.

In other words, the bandwidth determines a bandwidth between two pre-defined wavelengths.

A value *D* indicates a chromatic dispersion caused by optical fibers. Preferably, the chromatic dispersion *D* indicates a chromatic dispersion with the unit

$$\frac{ps}{nm \cdot km} .$$

Preferably, the single value *D* indicates a chromatic dispersion caused by optical fibers is provided. In this case it is assumed, that all optical fibers are subject to the same amount of chromatic dispersion indicated by the value *D*. Alternatively to providing one single value *D* indicating a chromatic dispersion caused by optical fibers, a set of values $D_k, k \in N$ indicating respective chromatic dispersions caused by respective optical fibers are provided.

Furthermore, a value

$$D_C$$

indicates an amount of accumulated dispersion, that may be compensated by an optical device of an optical network node. Preferably, the value of compensable accumulated dispersion $D_C$ is provided in units as

$$\frac{ps}{nm}.$$

The amount of accumulated dispersion $D_C$ is one, which can be compensated at a network node in the case that optical signals have been transmitted over an optical fiber with a chromatic dispersion D' of a specific length L', such that

$$D_C = D' \cdot L'.$$

Furthermore, a time duration

$$T_g$$

of a guard band time slots is provided.

In a further step $ST_2$, optical transmission routes that are possible within the ring network are considered. For the different possible transmission routes, respective amounts of time shifts

$$S_r$$

caused during the transmission along the routes with index

$$r = 1 \ldots R$$

are determined as

$$S_r = \left( \sum_{k \in r} D L_k - D_C \delta_k \right) \cdot \Delta\lambda.$$

This determination of $S_r$ is carried out, in the case that one single value $D$ of chromatic dispersion is provided. In the alternative case, that a set of values $D_k$, $k \in N$ indicating respective chromatic dispersions caused by respective optical fibers are provided, the determination of $S_r$ is carried out as

$$S_r = \left( \sum_{k \in r} D_k L_k - D_C \delta_k \right) \cdot \Delta\lambda.$$

Within the above equations for $S_r$, the term

$$\delta_k = 0,1$$

determines, whether or not an optical device of an optical node of index k is engaged within the node for compensating an accumulated dispersion.

The above equations for $S_r$ are given for the example that the indicated bandwidth is chosen according to the first embodiment of the bandwidth as $\Delta\lambda$. In the case, that the bandwidth is chosen according to the second or third embodiment of the transmission band, the term $\Delta\lambda$ within the above equations for $S_r$ has to be replaced by the term $\Delta\lambda/2$.

In other words, within the step $ST_2$ the respective time shifts $S_r$ of the respective possible routes $r$=1...$R$ are determined as functions depending on whether one or more of the network nodes of the respective routes engaged the respective optical devices, using the provided values.

Within a step $ST_3$, the method $M_1$ determines those nodes, at which the respective optical devices should be engaged for causing a compensation of accumulated dispersion.

The determination of the nodes, at which the respective optical device shall be engaged for compensating the pre-defined amount of accumulated dispersio, are determined, such that the respective time shifts $S_r$ of the different respective transmission routes are kept below a pre-defined threshold. Preferably, this is given as

$$\left| S_r \right| < T_g .$$

The threshold in this case is the value $T_g$. This is the case, if the embodiment of the bandwidth is chosen according to the first embodiment of the bandwidth of the transmission band as $\Delta\lambda$. In the case that the bandwidth is chosen according to the second or third embodiment of the bandwidth of the transmission band as $\Delta\lambda/2$, the threshold is given as

$$\frac{T_g}{2} .$$

Thus, by determining the network nodes as described with regard to the step $ST_3$, it is ensured that the time shifts caused along the different transmission routes are kept below such a threshold such that data packets of wavelengths separated by the bandwidth do not overlap in time at the receiving sides of the respective transmission routes.

Within the step $ST_4$, control signals are generated, which are then transmitted via the management- or the control-plane of the network. The control signals indicate which network nodes shall engage their respective optical devices for achieving a compensation of a specific accumulated dispersion.

To summarize the above in other words, it is proposed a method of compensating chromatic dispersion in an optical ring network. In one step of the method, different values are provided, which are in detail

- link length values indicating respective lengths of optical fiber links connecting the network nodes of the optical ring network,

- a bandwidth value indicating a bandwidth of the transmission band used for transmitting the WDM optical signals,

- at least one dispersion value indicating a chromatic dispersion affecting the WDM optical signals on the optical fiber links, and

- an accumulated dispersion value indicating an amount of accumulated dispersion that may be compensated at one or at multiple ones of the network nodes.

The accumulated dispersion value indicates an amount of accumulated dispersion that may be compensated at multiple respective ones of the network nodes, respectively. The link length values indicate respective lengths of fiber lengths of the optical fiber links. The one or the multiple ones of the network nodes may compensate the amount of accumulated dispersion, respectively, by engaging a respective optical device.

The method comprises furthermore the steps of

- deriving for transmission routes of the network respective time shifts caused by chromatic dispersion for two pre-defined wavelengths of the transmission band on the respective transmission routes, using the provided values,

- determining those of the network nodes, at which the accumulated dispersion shall be compensated for ensuring that the respective time shifts of the respective transmission routes remain below a predefined time threshold,

- sending control signals to the determined network nodes, indicating that the determined network nodes shall compensate the accumulated dispersion.

Preferably, further control signals are sent to those network nodes, which shall not compensate the accumulated dispersion, wherein these further control signals indicate that the determined network nodes shall not compensate the accumulated dispersion.

Preferably, the control unit CTRL of the node ON, described with regard to Figure 3, generates and sends control data via the control- or management plane, wherein this control data indicates to the control- or management-system CS, described with regard to Figure 4, whether or not the node ON is configured, such that it compensates an accumulated dispersion. In the case, that all of the nods of the ring network report their configuration state in this manner to the control- or management-system CS, the control- or management-system CS is able to monitor the configuration states of the nodes of the optical ring network.

The respective time shifts are derived as functions depending on whether the accumulated dispersion is compensated at one or at multiple ones of the network nodes.

The predefined time threshold is a function of the guard band duration value.

By determining different transmission routes within the network, wherein a transmission route consists of one or more fiber links, and determining for the different transmission routes respective time shifts caused between two predefined wavelengths of the transmission band as a function depending on whether one or more nodes of the respective route compensate the mentioned amount of accumulated dispersion, it is possible to decide, which of the nodes shall be engaged, in order to keep the respective time shifts of the different possible transmission routes below a pre-defined threshold.

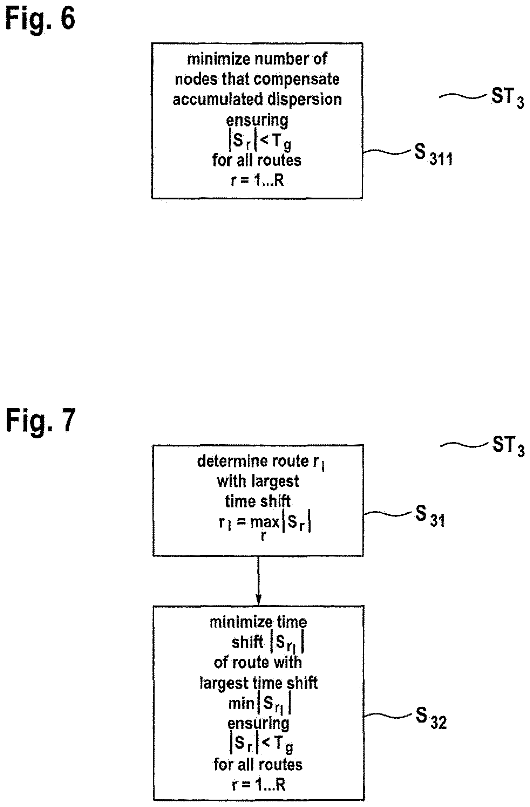

Figure 6 shows the step $ST_3$ of the proposed method $M_1$ shown in Figure 5 in more detail. According to Figure 6, the step $ST_3$ contains a substep $S_{311}$, within which the number of the optical devices engaged within the network nodes for compensating an accumulated dispersion is minimized, while still ensuring that the time shifts of the respective transmission routes are kept below a pre-defined threshold. Minimizing the number of network nodes, which engage their optical devices for accumulated dispersion compensation, is of advantage, since this minimizes the overall transmission length over which the different optical WDM signals are transmitted. This in turn reduces the amount of signal impairment experienced by the optical WDM signals, wherein this impairment may be caused by the optical devices within the respective network node.

The minimization described with regard to the step $S_{311}$ may be carried out according to an optimization algorithm.

For choosing an optimization algorithm achieving the previously mentioned minimization different solutions are possible. As two out of many alternatives, two examples of such algorithms are now described and mentioned in detail.

A first possibility for such a minimization algorithm is that of an exhaustive search. Within such an exhaustive search, all possibilities of combinations of nodes compensating the accumulated dispersion $D_C$ are considered as all combinations of the possible values of $\delta_k = 0,1$.

Using all the different possible combinations nodes each compensating the accumulated dispersion $D_C$, respective different time shift values $S_r$ may be generated and stored within a table. Next, searching through the table, one of those combinations of the values $\delta_k = 0,1$ may be chosen, which minimizes the number of nodes compensating the accumulated dispersion $D_C$, while still ensuring that the time shifts of the respective routes are kept below a pre-defined threshold as $|S_r| < T_g$.

An alternative possibility for a minimization algorithm is given as a linear programming algorithm that may be employed for carrying out the proposed minimization. Such a linear programming algorithm is described in detail in the document "George B. Dantzig and Mukund N. Thapa. 'Linear programming 1: Introduction'. Springer-Verlag, 1997"

Figure 7 shows the step $ST_3$ according to a further preferred embodiment. In this embodiment, the step $ST_3$ contains substeps $S_{31}$, $S_{32}$.

Within the step $S_{31}$, it is determined that the route of index $r = 1...R$, for which the respective time shift $S_r$ is the largest. This is the route with

$$\max_r \left| S_r \right| \ .$$

Within the step $S_{32}$, the time shift $S_r$ of the route with the largest time shift is minimized. This can be considered as the route for which

$$\min(\max_r |S_r|) \quad .$$

This minimization is also carried out, obeying the condition that the time shifts $S_r$ of all routes are kept below a pre-defined threshold. This is given as

$$|S_r| < T_g \quad \forall\, r \in R \quad .$$

The optimization as a minimization carried out within the step $S_{32}$ may be performed using the previously mentioned exhaustive search algorithm or the linear programming algorithm.

The advantage of carrying out step $ST_3$ as the determination of the node, at which the accumulated dispersion shall be compensated, is of advantage, since this method of determining the node is more robust in the case of an uncertainty of the actual link length $L_k$ of the network than the optimization previously described with regard to Figure 6.

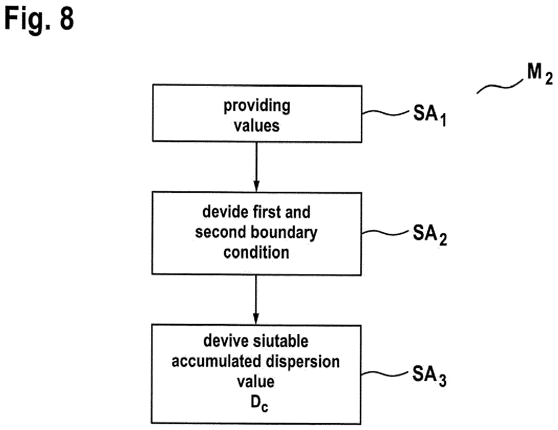

Figure 8 shows a method $M_2$ of determining a suitable value $D_C$ of accumulated dispersion, that shall be compensable at one or at respective ones of the network nodes of the ring network.

For standard networks, it can be shown via simulations, that an amount of $D_C=1\,630$ ps/nm ensures that dispersion issues can be managed within slotted ring networks.

Such an amount for $D_C$ corresponds to a constellation of dispersion in an equivalent 95 km long standard single mode fiber, wherein this consideration holds for a transmission bandwidth of $\Delta\lambda =30$ nm. The single mode fiber has in this example a chromatic dispersion of D=17 ps/nm/km. A tolerance of 100 ns in time shift is allowed, such that the guard band time duration is greater than 100 ns,

$$T_g > 100\,\text{ns}.$$

Furthermore, at least one link length of an optical fiber link is smaller than 100 km and no optical fiber link exceeds a length of 196 km in this example.

A more generic formula of appropriate granularity of the accumulated dispersion that is compensable is

$$D_C = T_g\,/\,\Delta\lambda - D \cdot L_{Min} \quad .$$

This more generic formula may be applied, in the case of assuming that all optical fibers of the network are subject to the same chromatic dispersion indicated by the single value $D$. Preferably, the amount of accumulated dispersion to be compensated at a network node is determined using the method $M_2$ described with regard to Figure 8.

Within a first step $SA_1$, a set of values is provided. The values are a length value $L_{min}$ indicating the length of the shortest optical fiber link within the network. A further length value indicates the length of the longest optical fiber link of the network, which is the value $L_{max}$. Furthermore, the link length of the ring circumference as the optical transmission length of the whole optical ring of the network is provided as the value $C$. Furthermore, the dispersion coefficient $D$ indicates the dispersion, which is a chromatic dispersion, caused by the optical fibers of the ring network, wherein this chromatic dispersion value $D$ is preferably provided in units as ps/nm/km. Furthermore, the time duration of the guard band time slot $T_g$ is provided as well as the bandwidth $\Delta\lambda$ of the transmission band.

Within the following step $SA_2$, a first and a second boundary condition are derived. The first boundary condition is derived, which pays respect to the condition that single link routes should be feasible if the optical device is a dispersion compensation module or a corresponding link is activated, yielding

$$D\,L_{\max} - (T_g\,/\,\Delta\lambda) < D_C < (T_g\,/\,\Delta\lambda) - D\,L_{\min} \quad .$$

The second boundary condition is derived from the fact that chromatic dispersion is compensated on the longest route, which is the full ring circumference, in the case that the boundary condition of

$$\left( \sum_{k=1}^{N} L_k \right) D - N\, D_C \;<\; T_g\, /\, \Delta\lambda$$

is fulfilled. This second boundary condition may be converted to the modified second boundary condition

$$\left( C\, D - (T_g\, /\, \Delta\lambda) \right)\, /\, N \;<\; D_C \;.$$

The optical WDM signals on the optical ring network can be maintained, i.e. kept synchronous, without overlapping of optical data packets, only if the conditions derived above are obeyed.

In the following, an averaged evaluation result will show that these boundary conditions are sufficient for practical metro networks.

Within the step $SA_3$, a suitable value for the accumulated dispersion $D_C$ that shall be compensated within a network node is derived from these boundary conditions.

In the averaged evaluation a typical metro network with single mode fibers is considered. The chromatic dispersion caused by the optical fibers is assumed to be D=17 ps/nm/km. The maximum link length is assumed to be $L_{\max}$=100$km$. The transmission bandwidth is assumed to be $\Delta\lambda$= 30$nm$, while the guard band duration is assumed to be $T_g$ =100$ns$.

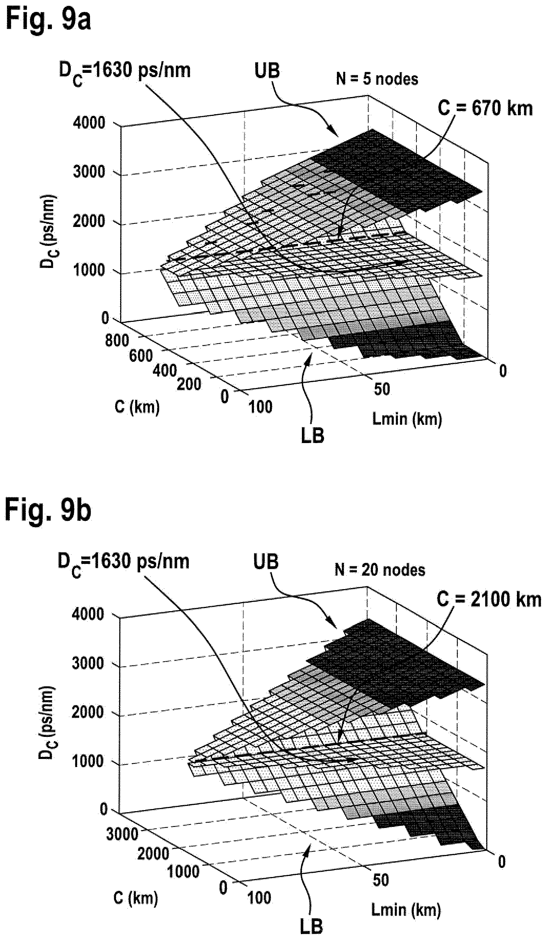

The results of Figure 9a assume a ring circumference of C=670 km.

The values of the minimum link length as well as the ring circumference are varied, wherein Figure 9a shows resulting upper boundary values for the accumulated dispersion $D_C$ that shall be compensated in the case that the network contains five network nodes. The upper bound UB is derived from the first boundary condition, while the lower bound LB is derived from the second boundary condition. Equivalent results are provided within Figure 9b for the number of networks nodes being an equal to twenty network nodes.

The results of Figure 9b assume a ring circumference of C=2100 km.

Figure 9a depicts a choice of $D_C$=1630 ps/nm, which falls well within the lower and upper bounds UB and LB. Thus, this value of $D_C$ chosen here is a good candidate for an amount of accumulated dispersion to be compensated at a network node.

The same holds for the averaged results and the choice of DC=1630 ps/nm for the network considered under Figure 9b.

The description and drawings merely illustrate the principles of the invention. It will thus be appreciated that those skilled in the art will be able to devise various arrangements that, although not explicitly described or shown herein, embody the principles of the invention and are included within its scope. Moreover, all statements herein reciting principles, aspects, and embodiments of the invention, as well as specific examples thereof, are intended to encompass equivalents thereof.

The functions of the various elements shown in the Figures 3 and 4, including any functional blocks labeled as 'processor' or 'control unit', may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term 'processor' or 'control unit' should not be construed to refer exclusively to hardware capable of executing software, and may implicitly include, without limitation, digital signal processor DSP hardware, network processor, application specific integrated circuit ASIC, field programmable gate array FPGA, read only memory ROM for storing software, random access memory RAM, and non volatile storage. Other hardware, conventional and/or custom, may also be included.

It should be appreciated by those skilled in the art that any block diagrams herein represent conceptual views of illustrative circuitry embodying the principles of the invention. Similarly, it will be appreciated that any flow charts or flow diagrams represent various processes which may be substantially represented in computer readable medium and so executed by a computer or processor, whether or not such computer or processor is explicitly shown.

**Claims**

1.  Method of compensating chromatic dispersion in an optical ring network,
    wherein data is transmitted along said optical ring network (ORN) using a set of wavelength division multiplexed (WDM) optical signals (S1, S2, S3) carrying respective synchronous data packet sequences,
wherein data packets (DP) of said data packet sequences are transmitted within respective packet time slots of a same packet duration value and wherein said data packets are separated by guard band time slots (GB) of a same guard band duration value (Tg), comprising, providing

- link length values indicating respective lengths of optical fiber links (L1, ..., LR) connecting the network nodes (A, B, C) of said optical ring network (ORN),
- a bandwidth value indicating a bandwidth of a transmission band,
- at least one dispersion value indicating a chromatic dispersion affecting said WDM optical signals on said optical fiber links (L1, ..., LR),
- an accumulated dispersion value indicating an amount of accumulated dispersion that may be compensated at one or at multiple ones of said network nodes (A, B, C),

comprising furthermore

- deriving for transmission routes of said network (ORN) respective time shifts caused by chromatic dispersion for two predefined wavelengths of said transmission band on said respective transmission routes, using the provided values,
- determining those of said network nodes, at which said accumulated dispersion shall be compensated for ensuring that said respective time shifts of said respective transmission routes remain below a predefined time threshold,
- sending control signals to the determined network nodes, indicating that the determined network nodes shall compensate said accumulated dispersion.

2. Method according to claim 1,
   wherein said respective time shifts are derived as functions depending on whether said accumulated dispersion is compensated at one or at multiple ones of said network nodes.

3. Method according to claim 1,
   wherein said predefined time threshold is a function of said guard band duration value.

4. Method according to claim 1,
   wherein said transmission band is used for transmitting said WDM optical signals,

5. Method according to claim 2
   wherein said accumulated dispersion value indicates an amount of accumulated dispersion that may be compensated at multiple ones of said network nodes respectively,
   and wherein said respective time shifts are derived as functions depending on whether said accumulated dispersion is compensated at one or more of said of said network nodes.

6. Method according to claim 1,
   wherein said one or multiple ones of said network nodes may compensate said amount of accumulated dispersion by engaging a respective optical device (OD).

7. Method according to claim 1,
   wherein said link length values indicate respective fiber lengths of said optical fiber links (L1, ..., LR).

8. Control- or management-system for an optical ring network,
   wherein data is transmitted along said optical ring network (ORN) using a set of wavelength division multiplexed (WDM) optical signals (S1, S2, S3) carrying respective synchronous data packet sequences,
   wherein data packets (DP) of said data packet sequences are transmitted within respective packet time slots of a same packet duration value and wherein said data packets are separated by guard band (GB) time slots of a same guard band duration value (Tg),
   wherein said control- or management system (CS) is operable to provide

- link length values indicating respective lengths of the optical fiber links (L1, ..., LR) connecting the network nodes (A, B, C) of said optical ring network (ORN),
- a bandwidth value indicating a bandwidth of a transmission band,

- at least one dispersion value indicating a chromatic dispersion affecting said WDM optical signals along said optical fiber links (L1, ..., LR),
- an accumulated dispersion value indicating an amount of accumulated dispersion that may be compensated at one or at multiple ones of said network nodes (A, B, C),

wherein said control- or management system is furthermore operable to

- derive for transmission routes of said network respective time shifts caused by chromatic dispersion for two predefined wavelengths of said transmission band on said respective transmission routes, using the provided values,
- determine those of said network nodes, at which said accumulated dispersion shall be compensated for ensuring that said respective time shifts of said respective transmission routes remain below a predefined threshold,
- generate and send control signals to the determined network nodes, indicating that the determined network nodes shall compensate said accumulated dispersion.

9. Control- or management-system according to claim 8,
wherein said system (CS) is furthermore operable to derive said respective time shifts as functions depending on whether said accumulated dispersion is compensated at one or at multiple ones of said network nodes.

10. Control- or management-system according to claim 8,
wherein said predefined time threshold is a function of said guard band duration value.

**Patentansprüche**

1. Verfahren zur Kompensation der chromatischen Dispersion in einem optischen Ringnetzwerk,
wobei Daten entlang des besagten optischen Ringnetzwerks (ORN) über einen Satz optischer Wellenlängenmultiplex- (WDM-) Signale (S1, S2, S3) übertragen werden, die das jeweilige synchrone Datenpaketsequenz tragen,
wobei Datenpakete (DP) der besagten Datenpaketsequenzen in entsprechenden Paket-Zeitschlitzen von gleichem Paketdauerwert übertragen werden und wobei besagte Datenpakete von Schutzband-Zeitschlitzen (GB) von gleichem Schutzbanddauerwert (Tg) getrennt werden, umfassend der Bereitstellung

- von Verbindungs-Längenwerten, die die jeweiligen Längen der optischen Glasfaserverbindungen (L1, ..., LR) angeben, die die Netzwerkknoten (A, B, C) in besagtem optischen Ringnetzwerk (ORN) verbinden,
- eines Bandbreitenwertes, der eine Bandbreite eines Übertragungsbandes angibt,
- mindestens eines Dispersionswertes, der eine chromatische Dispersion angibt, die besagte optische WDM-Signale in besagten optischen Glasfaserverbindungen (L1, ..., LR) beeinflusst,
- eines Wertes von akkumulierter Dispersion, der eine Menge an akkumulierter Dispersion angibt, die an einem oder mehreren der besagten Netzwerkknoten (A, B, C) kompensiert werden muss,

weiterhin umfassend

- Ableiten von Übertragungswegen in besagtem Netzwerk (ORN) entsprechend der Zeitverschiebungen, die von der chromatischen Dispersion für zwei vordefinierte Wellenlängen in besagtem Übertragungsband auf den besagten jeweiligen Übertragungswegen verursacht werden, unter Verwendung der bereitgestellten Werte,
- Ermittlung jener der besagten Netzwerkknoten, an denen besagte akkumulierte Dispersion kompensiert werden muss, um sicherzustellen, dass besagte jeweilige Zeitverschiebungen auf besagten jeweiligen Übertragungswegen unterhalb einer vordefinierten Zeitschwelle bleiben,
- Senden von Steuersignalen an die ermittelten Netzwerkknoten, die anzeigen, dass die ermittelten Netzwerkknoten besagte akkumulierte Dispersion kompensieren müssen.

2. Verfahren nach Anspruch 1,
wobei besagte jeweilige Zeitverschiebungen als Funktionen abgeleitet werden, in Abhängigkeit davon, ob besagte akkumulierte Dispersion an einem oder mehreren der besagten Netzwerkknoten kompensiert wird.

3. Verfahren nach Anspruch 1,
wobei die vordefinierte Zeitschwelle eine Funktion von besagtem Schutzbanddauerwert ist.

**4.** Verfahren nach Anspruch 1,
wobei besagtes Übertragungsband für die Übertragung besagter optischer WDM-Signale verwendet wird,

**5.** Verfahren nach Anspruch 2
wobei besagter Wert einer akkumulierter Dispersion die Menge an akkumulierter Dispersion angibt, die an mehreren der besagten jeweiligen Netzwerkknoten kompensiert werden muss,
und wobei besagte jeweilige Zeitverschiebungen als Funktionen abgeleitet werden, in Abhängigkeit davon, ob besagte akkumulierte Dispersion an einem oder an mehreren der besagten Netzwerkknoten kompensiert wird.

**6.** Verfahren nach Anspruch 1,
wobei besagte Netzwerkknoten (einer oder mehrere) die besagte Menge an akkumulierter Dispersion durch Aktivieren einer jeweiligen optischen Vorrichtung (OD) kompensieren können.

**7.** Verfahren nach Anspruch 1,
wobei besagte Verbindungs-Längenwerte die jeweiligen Faserlängen besagter optischer Glasfaserverbindungen (L1, ..., LR) angeben.

**8.** Steuerungs- oder Managementsystem für ein optisches Ringnetzwerk,
wobei Daten entlang des besagten optischen Ringnetzwerks (ORN) über einen Satz optischer Wellenlängenmultiplex- (WDM-) Signale (S1, S2, S3) übertragen werden, die das jeweilige synchrone Datenpaketsequenz tragen, wobei Datenpakete (DP) der besagten Datenpaketsequenzen in entsprechenden Paket-Zeitschlitzen von gleichem Paketdauerwert übertragen werden und wobei besagte Datenpakete von Schutzband- (GB) Zeitschlitzen von gleichem Schutzbanddauerwert (Tg) getrennt werden, wobei besagtes Steuerungs- oder Managementsystem (CS) betreibbar ist, folgendes bereitzustellen

- Verbindungs-Längenwerte, die die jeweiligen Längen der optischen Glasfaserverbindungen (L1, ..., LR) angeben, die die Netzwerkknoten (A, B, C) in besagtem optischen Ringnetzwerk (ORN) verbinden,
- einen Bandbreitenwert, der eine Bandbreite eines Übertragungsbandes angibt,
- mindestens einen Dispersionswert, der eine chromatische Dispersion angibt, die besagte optische WDM-Signale entlang besagter optischer Glasfaserverbindungen (L1, ..., LR) beeinflusst,
- einen Wert von akkumulierter Dispersion, der eine Menge an akkumulierter Dispersion angibt, die an einem oder mehreren der besagten Netzwerkknoten (A, B, C) kompensiert werden muss,

wobei besagtes Steuerungs- oder Managementsystem weiterhin betreibbar ist,

- Übertragungswege in besagtem Netzwerk abzuleiten, entsprechend der Zeitverschiebungen, die von der chromatischen Dispersion für zwei vordefinierte Wellenlängen in besagtem Übertragungsband auf den besagten jeweiligen Übertragungswegen verursacht werden, unter Verwendung der bereitgestellten Werte,
- jene der besagten Netzwerkknoten zu ermitteln, an denen besagte akkumulierte Dispersion kompensiert werden muss, um sicherzustellen, dass besagte jeweilige Zeitverschiebungen auf besagten jeweiligen Übertragungswegen unterhalb eines vordefinierten Schwellenwertes bleiben,
- Steuersignale zu erzeugen und an die ermittelten Netzwerkknoten zu senden, die anzeigen, dass die ermittelten Netzwerkknoten besagte akkumulierte Dispersion kompensieren müssen.

**9.** Steuerungs- oder Managementsystem nach Anspruch 8,
wobei besagtes System (CS) weiterhin betreibbar ist, besagte jeweilige Zeitverschiebungen als Funktionen abzuleiten, in Abhängigkeit davon, ob besagte akkumulierte Dispersion an einem oder mehreren der besagten Netzwerkknoten kompensiert wird.

**10.** Steuerungs- oder Managementsystem nach Anspruch 8,
wobei besagte vordefinierte Zeitschwelle eine Funktion von besagtem Schutzbanddauerwert ist.

**Revendications**

**1.** Procédé de compensation de dispersion chromatique dans un réseau optique en anneau,
dans lequel des données sont émises le long dudit réseau optique en anneau (ORN) en utilisant un ensemble de signaux optiques (S1, S2, S3) multiplexés par répartition en longueur d'onde (WDM) transportant des séquences respectives synchrones de paquets de données,
dans lequel les paquets de données (DP) desdites séquences de paquets de données sont émis dans des créneaux temporels de paquet respectifs d'une même valeur de durée de paquet et dans lequel lesdits paquets de données sont séparés par des créneaux temporels de bande de garde (GB) d'une même valeur de durée de bande de garde (Tg), comprenant la fourniture :

- de valeurs de longueur de liaison indiquant les longueurs respectives des liaisons par fibres optiques (L1, ..., LR) reliant les noeuds de réseau (A, B, C) dudit réseau optique en anneau (ORN),
- d'une valeur de bande passante indiquant une largeur d'une bande d'émission,
- d'au moins une valeur de dispersion indiquant une dispersion chromatique affectant lesdits signaux optiques WDM sur lesdites liaisons par fibres optiques (L1, .... LR),
- d'une valeur de dispersion accumulée indiquant une quantité de dispersion accumulée pouvant être compensée au niveau d'un ou de plusieurs desdits noeuds de réseau (A, B, C),

comprenant en outre les étapes suivantes :

- dériver, pour des itinéraires d'émission dudit réseau (ORN), des décalages temporels respectifs causés par la dispersion chromatique pour deux longueurs d'onde prédéfinies de ladite bande d'émission sur lesdits itinéraires d'émission respectifs, en utilisant les valeurs fournies,
- déterminer lesdits noeuds de réseau au niveau desquels ladite dispersion accumulée doit être compensée pour garantir que lesdits décalages temporels respectifs desdits itinéraires d'émission respectifs restent inférieurs à un seuil de temps prédéfini,
- envoyer des signaux de commande aux noeuds de réseau déterminés, indiquant que les noeuds de réseau déterminés doivent compenser ladite dispersion accumulée.

2. Procédé selon la revendication 1,
dans lequel lesdits décalages temporels respectifs sont dérivés comme des fonctions selon que ladite dispersion accumulée est compensée au niveau d'un ou de plusieurs desdits noeuds de réseau.

3. Procédé selon la revendication 1,
dans lequel ledit seuil de temps prédéfini dépend de ladite valeur de durée de bande de garde.

4. Procédé selon la revendication 1,
dans lequel ladite bande d'émission est utilisée pour émettre lesdits signaux optiques WDM.

5. Procédé selon la revendication 2,
dans lequel ladite valeur de dispersion accumulée indique une quantité de dispersion accumulée pouvant être compensée au niveau de plusieurs desdits noeuds de réseau respectivement,
et dans lequel lesdits décalages temporels respectifs sont dérivés comme des fonctions selon que ladite dispersion accumulée est compensée au niveau d'un ou de plusieurs desdits noeuds de réseau.

6. Procédé selon la revendication 1,
dans lequel lesdits un ou plusieurs desdits noeuds de réseau peuvent compenser ladite quantité de dispersion accumulée en utilisant un dispositif optique respectif (OD).

7. Procédé selon la revendication 1,
dans lequel lesdites valeurs de longueur de liaison indiquent les longueurs de fibres optiques respectives desdites liaisons par fibres optiques (L1, .... LR).

8. Système de commande ou de gestion d'un réseau optique en anneau,
dans lequel des données sont émises le long dudit réseau optique en anneau (ORN) en utilisant un ensemble de signaux optiques (S1, S2, S3) multiplexés par répartition en longueur d'onde (WDM) transportant des séquences respectives synchrones de paquets de données,
dans lequel les paquets de données (DP) desdites séquences de paquets de données sont émis dans des créneaux temporels de paquet respectifs d'une même valeur de durée de paquet et dans lequel lesdits paquets de données sont séparés par des créneaux temporels de bande de garde (GB) d'une même valeur de durée de bande de garde (Tg),
dans lequel ledit système de commande ou de gestion (CS) peut être utilisé pour fournir :

- des valeurs de longueur de liaison indiquant les longueurs respectives des liaisons par fibres optiques (L1, ..., LR) reliant les noeuds de réseau (A, B, C) dudit réseau optique en anneau (ORN),
- une valeur de bande passante indiquant une largeur d'une bande d'émission,
- au moins une valeur de dispersion indiquant une dispersion chromatique affectant lesdits signaux optiques WDM le long desdites liaisons par fibres optiques (L1, ..., LR),
- une valeur de dispersion accumulée indiquant une quantité de dispersion accumulée pouvant être compensée au niveau d'un ou de plusieurs desdits noeuds de réseau (A, B, C),

dans lequel ledit système de commande ou de gestion peut en outre être utilisé pour :

- dériver, pour des itinéraires d'émission dudit réseau (ORN), des décalages temporels respectifs causés par la dispersion chromatique pour deux longueurs d'onde prédéfinies de ladite bande d'émission sur lesdits itinéraires d'émission respectifs, en utilisant les valeurs fournies,
- déterminer lesdits noeuds de réseau au niveau desquels ladite dispersion accumulée doit être compensée pour garantir que lesdits décalages temporels respectifs desdits itinéraires d'émission respectifs restent inférieurs à un seuil prédéfini,
- générer et envoyer des signaux de commande aux noeuds de réseau déterminés, indiquant que les noeuds de réseau déterminés doivent compenser ladite dispersion accumulée.

9. Système de commande ou de gestion selon la revendication 8,
dans lequel ledit système (CS) peut en outre être utilisé pour dériver lesdits décalages temporels respectifs comme des fonctions selon que ladite dispersion accumulée est compensée au niveau d'un ou de plusieurs desdits noeuds de réseau.

10. Système de commande ou de gestion selon la revendication 8,
dans lequel ledit seuil de temps prédéfini dépend de ladite valeur de durée de bande de garde.

# Fig. 1

Data channels

Control channel regenerated at each node

$S$

$T_s$

$T_p$ $T_g$

GB DP

$S_1$ — DPS$_1$

GB DP

$S_2$ — DPS$_2$

$S_c$ — CIS

A

$\overrightarrow{TXD}$

OL$_1$

B

OL$_2$

C

OL$_3$

ORN

EP 2 763 334 B1

# Fig. 2

Data channels

Control channel regenerated at each node

**Fig. 3**

## Fig. 4

EP 2 763 334 B1

to/from
management-/
control-plane

DI

M

P

IIF1

CS

# Fig. 5

$M_1$

| providing values | $ST_1$ |

determine
time shift
$S_r$
of respective
routes
$r = 1...R$

$ST_2$

determine
the nodes,
at which
accumulated
dispersion
shall be
compensated,
ensuring
$|S_r| < T_g$
for all routes

$ST_3$

instruct the nodes,
at which
accumulated
dispersion
shall be
compensated

$ST_4$

## Fig. 6

minimize number of
nodes that compensate
accumulated dispersion
ensuring
$|S_r| < T_g$
for all routes
r = 1...R

$\sim ST_3$

$S_{311}$

## Fig. 7

determine route $r_l$
with largest
time shift
$r_l = \max_r |S_r|$

$\sim ST_3$

$S_{31}$

minimize time
shift $|S_{r_l}|$
of route with
largest time shift
$\min |S_{r_l}|$
ensuring
$|S_r| < T_g$
for all routes
r = 1...R

$S_{32}$

# Fig. 8

$$M_2$$

| providing values | SA$_1$ |
|---|---|

$\downarrow$

| devide first and second boundary condition | SA$_2$ |
|---|---|

$\downarrow$

| devive siutable accumulated dispersion value D$_c$ | SA$_3$ |
|---|---|

# Fig. 9a

# Fig. 9b

**EP 2 763 334 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2552037 A1
- EP 2249493 A1
- EP 12306184 A
- EP 12290124 A

**Non-patent literature cited in the description**

- **GEORGE B. DANTZIG ; MUKUND N. THAPA.** Linear programming 1: Introduction. Springer-Verlag, 1997